# EUROPEAN PATENT APPLICATION

(11) **EP 2 014 422 A1**
(43) Date of publication of application: **14.01.2009**
(21) Application number: 08160240.1
(22) Date of filing: 11.07.2008
(51) Int. Cl.: B25F 3/00

(54) **Combination Tool**

(30) Priority: 13.07.2007 US 777376
(71) Applicant: Black & Decker, Inc., Newark, DE 19711 (US)
(72) Inventor: Whitehead, Jeff, Baltimore, PA 21212 (US); Snider, Gregory Scott, Bel-Air, MD 21014-5436 (US); Campbell, David Charles, Bel Air, MD 21014 (US); Marshall, James D., Mallorytown Ontario KOE 1RO (CA); Milligan, Michael A., Gananoque Ontario K7G 2V4 (CA); Agronin, Michael L., Owings Mills, MD 21117 (US); Rogers, Joe, Jarrettsville, MD 21084 (US); Heavel, Richard J., Hanover, PA 17331 (US)
(74) Representative: Bell, Ian Stephen

(57) **Abstract**

A power hand tool can include a generally longitudinal housing having a first end and a second end. An indicator can be disposed on the housing. A first and a second jaw member can be arranged at the first end wherein one of the first and second jaw members can rotate relative to the other jaw member. A motor assembly can be disposed in the housing and include an output member arranged at the second end. A sensor can be arranged at the second end and configured to sense an electrical field in proximity thereof. The sensor can generate a signal in response to a sensed electrical field. A controller can receive the sensor signal from the sensor assembly and control operation of the indicator in response thereto.

## Description

The present disclosure relates to hand tools and more specifically to a hand tool that provides a combination of multiple tools into one hand-held combination tool.

Hand tools are available in many sizes for various applications. Examples of some hand tools typically needed for simple electrical tasks (i.e., fixing or replacing a wall socket) can include screwdrivers, pliers, wire cutters, and electric field detectors. Unfortunately, swapping out between various tools during such simple electrical tasks can be cumbersome and time consuming.

A power hand tool according to the present invention can include a generally longitudinal housing having a first end and a second end. An indicator can be disposed on the housing. A first and a second jaw member can be arranged at the first end wherein one of the first and second jaw members can rotate relative to the other jaw member. A motor assembly can be disposed in the housing and include an output member arranged at the second end. A sensor can be arranged at the second end and configured to sense an electrical field in proximity thereof. The sensor can generate a signal in response to the sensed electrical field. A controller can receive the sensor signal from the sensor assembly and control operation of the indicator in response thereto.

According to additional features the indicator can include a series of light sources. The controller can illuminate the series of light sources in a flashing sequence corresponding to a magnitude of electrical field sensed by the sensor. The indicator can further include an audible output device that emits an audible output signal. The controller can activate the audible output device based on a sensed electrical field.

According to yet other features, the power hand tool can include a first light source disposed at the first end and a second light source disposed at the second end. A first switch can be disposed on the housing and be movable between at least a first and a second position. The first light source can illuminate in the first position and the second light source can illuminate in the second position.

According to other features, the housing can define a passage. The cutting member can be disposed on the housing and extend generally in the passage. The cutting member can be adapted to cut insulating material around a wire upon advancement of the wire through the passage. A second switch can be disposed on the housing and be movable between at least a first and a second position. The output member can rotate in a first direction in the first position and rotate in an opposite second direction in the second position. A locking member can be disposed on the housing and be movable between a first and a second position. The first and second jaw members are precluded from rotating in the first position. The second end of the tool can define a hex bit holder. The output member can rotate the hex bit holder upon activation of the motor assembly.

Accordingly, a first aspect of the invention provides a power hand tool comprising: a generally longitudinal housing having a first end and a second end; an indicator disposed on the housing; a first and a second jaw member arranged at the first end wherein one of the first and second jaw members rotates relative to the other jaw member; a motor assembly in the housing, the motor assembly including an output member arranged at the second end; a sensor arranged at the second end and configured to sense an electric field in proximity thereof and generate a signal in response thereto; and a controller that receives the sensor signal from the sensor assembly and that controls operation of the indicator in response thereto.

A second aspect of the invention provides a power hand tool comprising: a generally longitudinal housing; an indicator disposed on the housing; a motor assembly in the housing, the motor assembly including an output member arranged at an end of the housing; a sensor arranged at the end and configured to sense an electrical field in proximity thereof and generate a signal in response thereto; and a controller that receives the sensor signal from the sensor assembly and that controls operation of the indicator in response thereto.

A third aspect of the invention provides a power hand tool comprising: a generally longitudinal housing having a first end and a second end; an indicator disposed on the housing and comprising a plurality of light sources; a motor assembly in the housing, the motor assembly including an output member arranged at a first end; a sensor arranged at the first end and configured to sense an electrical field in proximity thereof and generate a signal in response thereto; and a controller that receives the sensor signal from the sensor assembly and that illuminates the series of light sources in a manner corresponding to a magnitude of the electrical field sensed by the sensor.

A fourth aspect of the invention provides a power hand tool comprising: a generally longitudinal housing having a first end and a second end; a first and a second jaw member arranged at the first end wherein one of the first and second jaw members rotates relative to the other jaw member; and a motor assembly in the housing, the motor assembly including an output member arranged at the second end, the output member adapted to removably receive tool bits.

It is to be understood that any feature of any aspect of the invention may be a feature of any other aspect of the invention.

Further areas of applicability will become apparent from the description provided herein.

The drawings described herein are for illustration purposes only.
FIG. 1 is an upper front perspective view of an exemplary combination tool constructed in accordance with the teachings of the present disclosure;
FIG. 2 is an upper rear perspective view of the tool shown in FIG. 1;
FIG. 3 is top view of the tool shown in FIG. 1;
FIG. 4 is a side view of the tool shown in FIG. 1;
FIG. 5 is a bottom view of the tool shown in FIG. 1;
FIG. 6 is a front end view of the tool shown in FIG. 1;
FIG. 7 is a rear end view of the tool shown in FIG. 1;
FIG. 8 is a side view of the tool of FIG. 1 shown with portions of the cover removed and a handle in a locked position;
FIG. 9 is a side view of the tool of FIG. 1 shown with portion of the cover removed and the handle in an unlocked position;
FIG. 10 is an end perspective view of a portion of the tool illustrating a portion of an electric field detector according to the present disclosure;
FIG. 11 is a front perspective view of a portion of the tool according to additional features of the present disclosure; and
FIG. 12 is a side view of a portion of the tool according to additional features of the present disclosure.

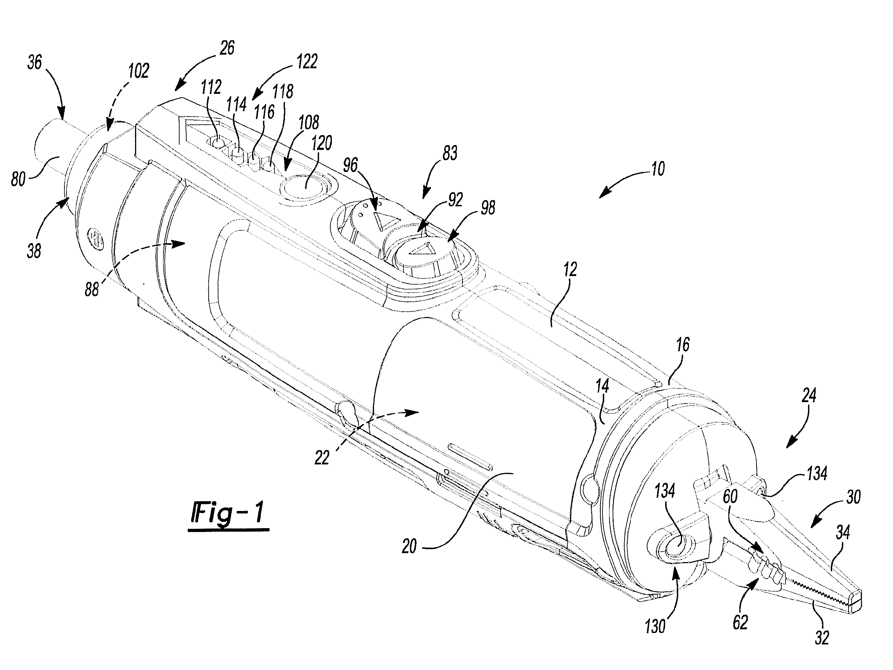

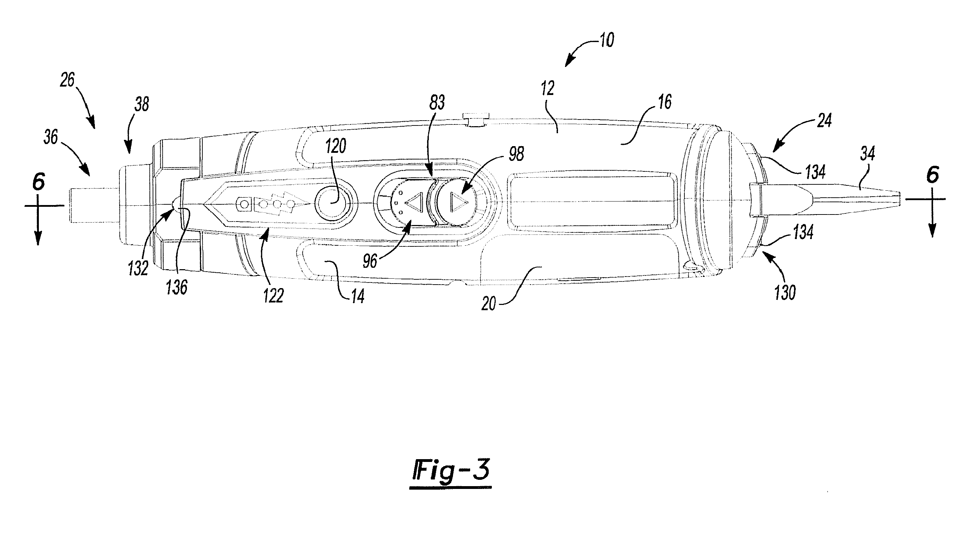

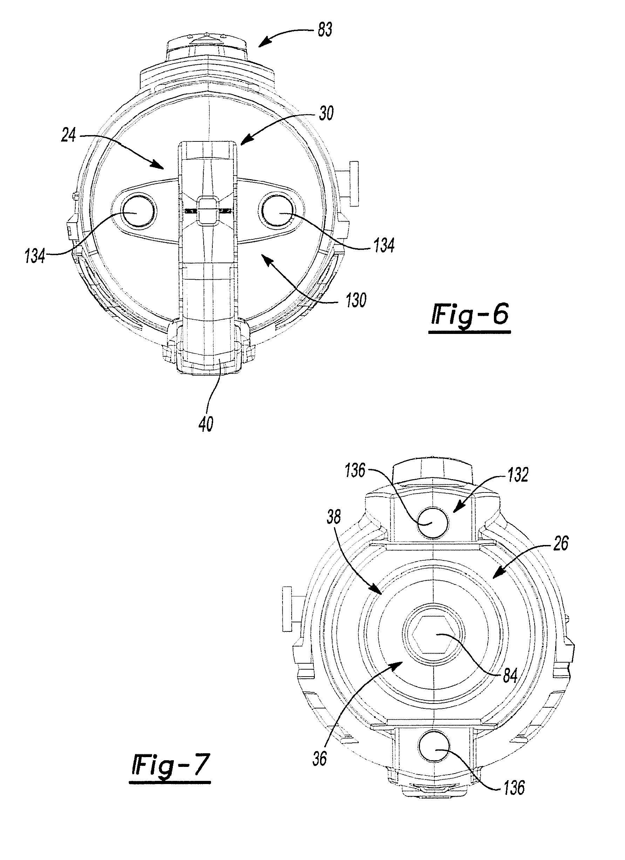

With initial reference to FIGS. 1-7, an exemplary power hand tool constructed in accordance with a first example of the present teachings is shown and generally identified at reference numeral 10. The power hand tool 10 can include a generally longitudinal housing 12 having a pair of clam shell portions 14 and 16. A door 20 can be defined on the first clam shell portion 14. The door 20 can be opened and closed to gain access to a battery compartment 22. The power hand tool 10 includes a first end 24 and a second end 26. The first end 24 can include a jaw assembly 30 having a first and a second jaw member 32 and 34, respectively. The second end 26 can include a power driven assembly 36 and an electric field detector assembly 38.

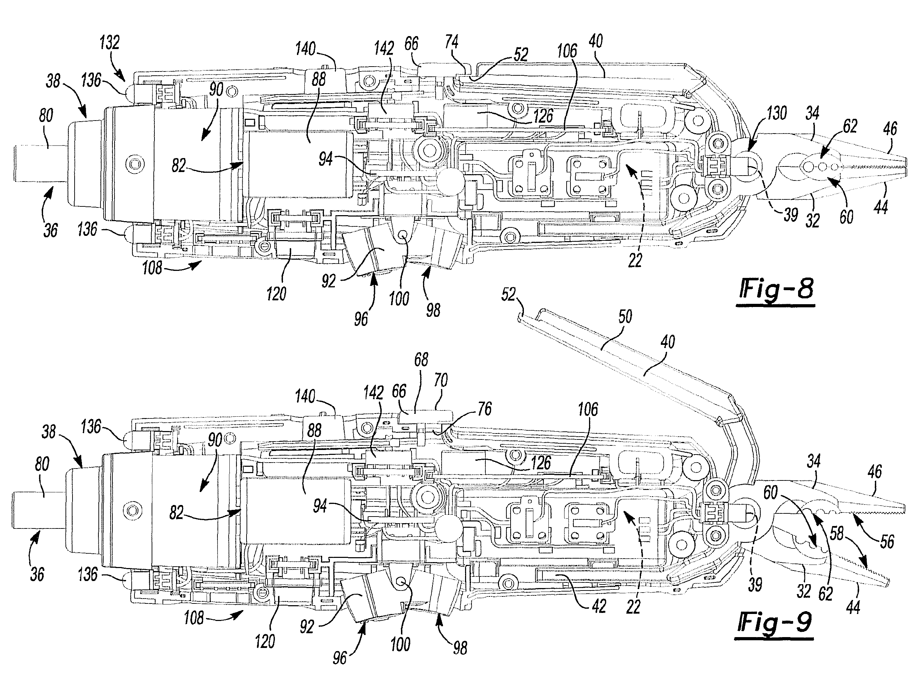

With additional reference to FIGS. 8 and 9, the jaw assembly 30 will be described. The first and second jaw member 32 and 34 can be rotatably coupled about a pivot axis 39. In general, the first and second jaw members 32 and 34 are movable about the pivot axis 39 between a closed position (FIG. 8) and an open position (FIG. 9). In the particular example shown, the first jaw member 32 can rotate while the second jaw member 34 can be fixed relative to the housing 12. The respective first and second jaw members 32 and 34 can define proximal ends 40 and 42 and distal ends 44 and 46, respectively. The proximal end 40 of the first jaw member 32 can define a handle 50 having a catch 52 formed thereon. The proximal end 42 of the second jaw member 34 is generally captured within the housing 12.

The distal ends 44 and 46 of the jaw members 32 and 34 can have rough inner surfaces 56 and 58, respectively. The inner surfaces 56 and 58 can facilitate a gripping action. The first and second jaw members 32 and 34 can further define complementary cutting portions 60 and 62. The cutting portions 60 and 62 can facilitate removal of an insulating portion of a wire (not shown). In one example, a wire can be placed between the respective first and second jaw members 32 and 34 (FIG. 9) and aligned with an appropriate sized cutting portion 60 and 62 for a given wire. Next, the first jaw member 32 can be pivoted about the pivot axis 39 to the closed position (FIG. 8) such that a cutting portion 60, 62 cuts through the insulating portion but not the wire (not specifically shown). Those skilled in the art will appreciate that the wire can then be pulled to direct the cutting portion along the wire to remove a desired length of insulating portion.

A locking member 66 can be slidably disposed in the housing 12. The locking member 66 generally defines a body 68 having a user engagement portion 70, a slide 72 and a notch 74. The slide 72 can advance along a track 76 defined on the housing 12. The locking member 66 can move in a generally linear direction along the track 76 between a first position (FIG. 8) and a second position (FIG. 9). In the first position, the notch 74 of the locking member 66 locates over the catch 52 of the first jaw member 32 thereby capturing the first jaw member 32 in the locked position. In the second position, the notch 74 of the locking member 66 can be away from engagement with the catch 52 of the first jaw member 32 thereby permitting the first jaw member 32 to rotate about the pivot axis 39.

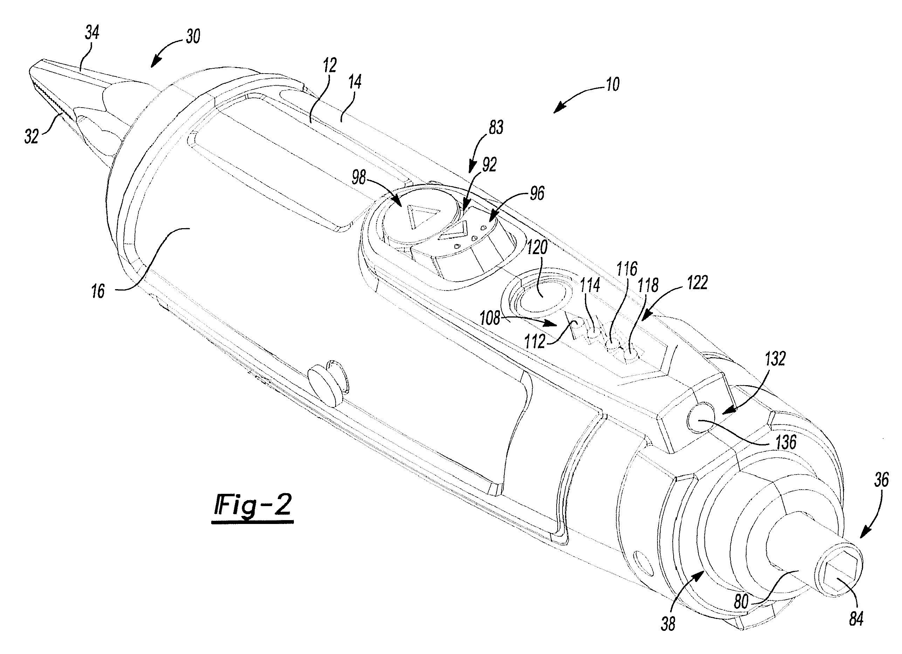

The power driven assembly 36 can include an output member 80 driven by a motor assembly 82 in the housing 12 and a first user interface portion 83. The output member 80 can include a receiving portion 84 (FIG. 2) adapted to releasably secure various bits such as screwdriver bits, hex-head bits and others. In the example shown, the receiving portion 84 comprises a hexagonal bore. According to one example, the hexagonal bore can be magnetic for enhancing secure attachment with a metallic bit. The motor assembly 82 can include a motor and a transmission 90. The transmission 90 can be disposed intermediate to the motor 88 and the output member 80 for converting a rotational output of the motor 88 into rotation of the output member 80. The first user interface portion 83 can include a switch 92 such as a rocker switch that communicates with a first controller 94 (FIG. 8). In one example, the first controller 94 can include a printed circuit board (PCB). The switch 92 includes a first engagement portion 96 and a second engagement portion 98. The switch 92 can pivot about an axis 100 (FIG. 8) between a first position and a second position. In the first position, the first controller 94 communicates an electrical signal to activate the motor 88 in a first rotational direction. In the second position, the first controller 94 communicates an electrical signal to activate the motor 88 in a second, opposite rotational direction. Other button/switch configurations are contemplated for selectively communicating electrical power to the motor 88.

The electric field detector assembly 38 can include an antenna 102, a second controller 106 and a second user interface portion 108. The antenna 102 can be in proximity to the output member 80 (and also any bit secured by the output member 80) such that it becomes capacitively coupled without making physical contact with the moving parts. The output member 80 becomes an extension of the antenna 102, enabling improved sensitivity and directionality. The antenna 102 can include a series of conductive members 111 arranged radially outwardly of the output member 80. As the output member 80 is moved in close proximity to an electric field (i.e. a wall socket), the antenna 110 can monitor that electric field and communicate a signal to the second controller 106 indicating that a field is near. The sensor 102 in the particular example provided is configured to provide a signal that is related to a field sensed in close proximity to the output member 80. The signal can vary to correspond to varying magnitudes of field strength detected in proximity to the sensor 102.

According to one example, the second user interface portion 108 can include a plurality of light emitting diodes (LED's) 112, 114, 116, and 118 and an activation button 120. The LED's, collectively referred to at 122, can be in electrical communication with the second controller 106. According to the example shown, one green LED 112 and three red LED's 114, 116, and 118 are provided. As will be described, the second controller 106 can control the illumination of the LED's 122 based on amplitude or other characteristics, such as frequency, of the detected field. The activation button 120 can be depressed to provide power to the electric field detector assembly 38. In one example, the activation button 120 must remain depressed for continuous operation of the electric field detector assembly 38.

Operation of the electric field detector assembly 38 according to one example will be described. As used herein, the detector assembly 38 is described generally as detecting an electric field. It is appreciated however, that the detector assembly 38 can be adapted to sense/detect oscillating electric fields, 50/60 Hz electric fields, inductive fields, capacitive fields or other electrical fields. At the outset, a user can optionally insert a bit (not shown) into the receiving portion 84. Next, the activation button 120 can be depressed. The second controller 106 can illuminate the green LED 112 upon depression of the activation button 120. If the antenna 110 is in proximity to an electric field, a signal is communicated to the second controller 106. While the activation button 120 is depressed, the second controller 106 evaluates the magnitude and frequency of the signal. The second controller 106 can compare the magnitude and frequency of the signal to stored reference values, and can perform other filtering and amplification functions, and then communicate an appropriate visual and/or audible signal to the user. In one example, the second controller 106 can illuminate the red LED's 114, 116, and 118 in a flashing sequence when an electric field above a certain magnitude is detected. The frequency of flashing can be proportional to a magnitude of field detected. For example, the frequency of flashing can increase with an increase of field magnitude detected. It is appreciated that the LED's 114, 116, and 118 can be configured to illuminate according to other schemes. In another example, an audible alert such as by a beeper 126 can accompany any illumination of the red LED's 114, 116, and 118.

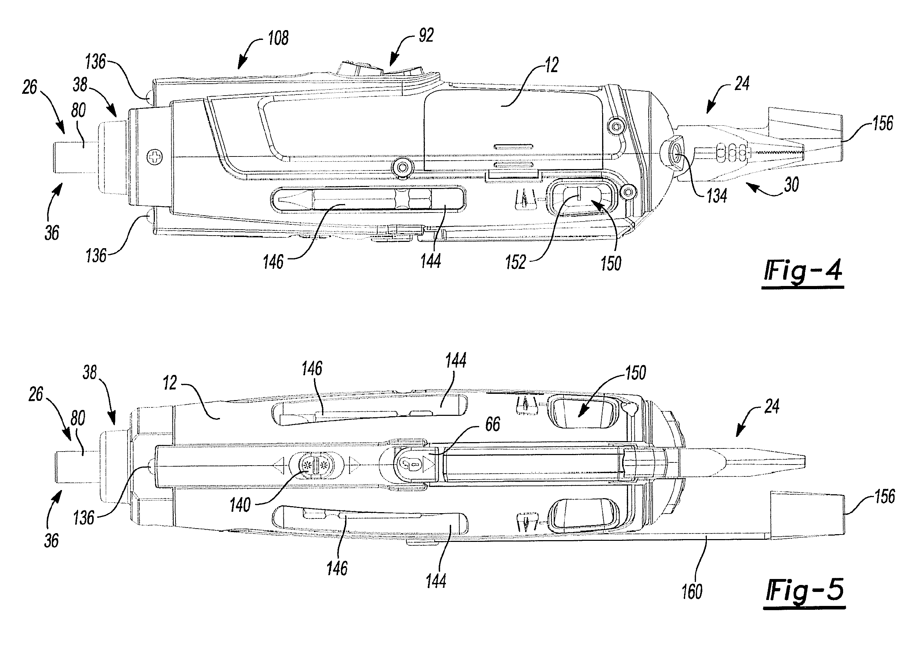

With reference now to FIGS. 1, 2, 6, and 7, the power hand tool 10 can also include a first flashlight assembly 130 arranged at the first end 24 and a second flashlight assembly 132 arranged at the second end 26. In the example shown, the first flashlight assembly 130 can include a first pair of LED's 134. The second flashlight assembly 132 can include a second pair of LED's 136. A slide 140 (FIG. 5) can communicate with a switch 142 disposed in the housing 12. The slide 140 can be movable between a first "ON" position to illuminate the first flashlight assembly 130, a second "ON" position to illuminate the second flashlight assembly 132 and a third "OFF" position. In the example shown, the slide 140 can be moved to the first position by sliding it (and therefore the switch 142) toward the first end 24 (i.e. in a direction rightward in FIG. 5). Likewise, the slide 140 can be moved to the second position by sliding it (and therefore the switch 142) toward the second end 26 (i.e. in a direction leftward in FIG. 5). The third "OFF" position can be an intermediate position, such as shown in FIG. 5. Other activation schemes are contemplated for illuminating the LED's 134 and 136. In one example, a switch (not shown) may be connected to the jaw members 32 and 34 such that when the jaw members 32 and 34 are closed and the slide 140 is moved to the "ON" position, the second flashlight assembly 132 is illuminated. If the jaw members 32 and 34 are open and the slide 140 is moved to the "ON" position, the first flashlight assembly 130 is illuminated. In another example, the second flashlight assembly 132 may be illuminated upon actuation of the switch 92 of the first user interface portion 83.

With reference to FIGS 4 and 5, the housing 12 can further define a pair of pockets 144. The pockets 144 can selectively retain bits 146. The bits 146 can be received by the receiving portion 84 of the output member 80. The housing 12 can also define a passage 150 having a cutting member 152 disposed therein. The cutting member 152 can be adapted to cut insulating material around a wire (not shown) upon advancement of the wire through the passage 150. A cap 156 can also be provided for removably covering the jaw assembly 30 (or the receiving portion 84). A flexible member 160 can extend between the cap 156 and the housing 12 to prevent misplacement of the cap.

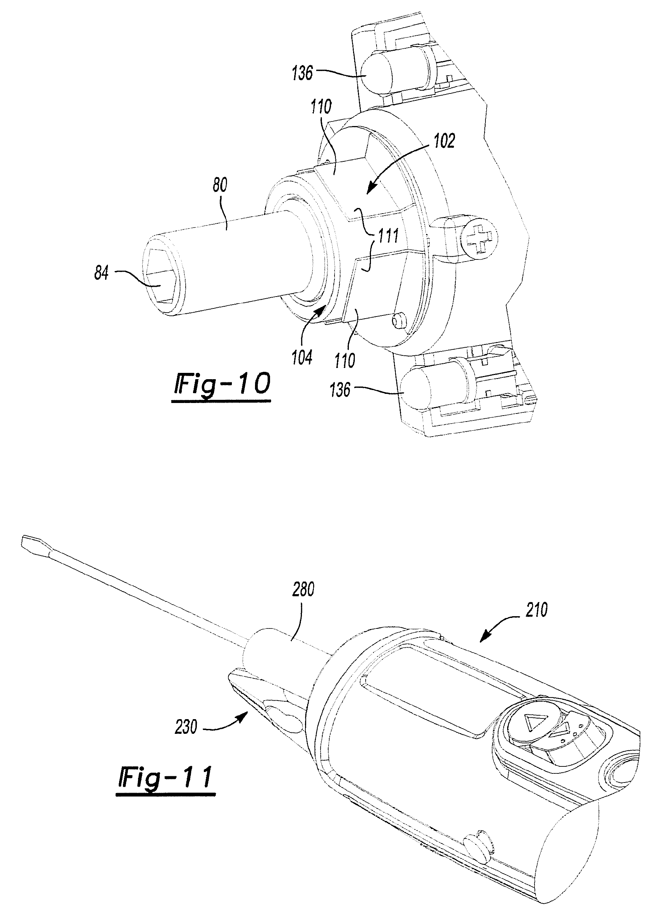

With reference to FIG. 11, a power hand tool 210 according to additional features is shown. The power hand tool 210 includes an output member 280 and a jaw assembly 230 arranged on a common end of the tool. In this way, a user can conveniently use both the output member 280 and the jaw assembly 30 without needing to rotate the tool 210 along its axis.

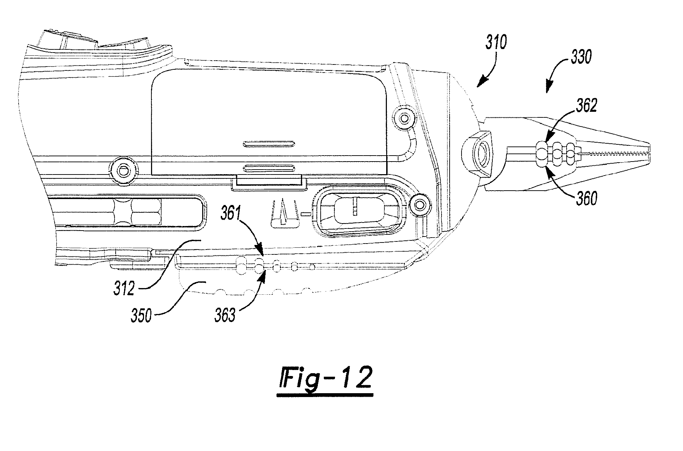

Turning now to FIG. 12, a power hand tool 310 according to additional features is shown. The power hand tool 310 includes a jaw assembly 330 having complementary cutting portions 360 and 362. Complementary cutting portions 361 and 363 can be formed between a housing 312 and a handle 350, respectively.

While the disclosure has been described in the specification and illustrated in the drawings with reference to various embodiments, it will be understood by those skilled in the art that various changes may be made and equivalents may be substituted for elements thereof without departing from the scope of the disclosure as defined in the claims. For example, while the preceding discussion described illumination of respective LED's in a flashing sequence, it is appreciated that the illumination of one or all of the LED's may comprise an LED that grows brighter in proportion with a magnitude of the electrical field. According to other examples, the electric field detector assembly 38 can comprise other sensors such as a stud sensor, a magnetic field sensor, a moisture sensor and other sensors. In addition, while a jaw assembly 30 and a power driven assembly 36 have been described, other tools may be configured on the first and second ends 24 and/or 26 of the power hand tool 10. Furthermore, the mixing and matching of features, elements and/or functions between various embodiments is expressly contemplated herein so that one of ordinary skill in the art would appreciate from this disclosure that features, elements and/or functions of one embodiment may be incorporated into another embodiment as appropriate, unless described otherwise above. Moreover, many modifications may be made to adapt a particular situation or material to the teachings of the disclosure without departing from the essential scope thereof.

## Claims

1. A power hand tool (10, 210, 310) comprising:
a generally longitudinal housing (12) having a first end (24) and a second end (26);
an indicator (122, 126) disposed on the housing;
a first and a second jaw member (32, 34) arranged at the first end wherein one of the first and second jaw members (32) rotates relative to the other jaw member (34);
a motor assembly (82) in the housing, the motor assembly including an output member (80) having a bit holder (84) arranged at the second end and wherein the output member rotates the bit holder upon activation of the motor assembly;
a sensor (102) arranged at the second end and configured to sense an electric field in proximity thereof and generate a signal in response thereto; and
a controller (106) that receives the sensor signal from the sensor assembly and that controls operation of the indicator in response thereto.

2. The power hand tool of claim 1 wherein the indicator includes at least one light source (112, 114, 116, 118).

3. The power hand tool of claim 2 wherein the indicator includes a series of light sources (112, 114, 116, 118), wherein the controller illuminates the series of light sources in a flashing sequence corresponding to a magnitude of the electric field sensed by the sensor.

4. The power hand tool of claim 2 or claim 3, wherein the indicator further includes an audible output device (126) that emits an audible output signal and wherein the controller activates the audible output device based on a sensed electrical field.

5. The power hand tool of any preceding claim, further comprising a first light source (130) disposed at the first end and a second light source (132) disposed at the second end.

6. The power hand tool of the claim 5, further comprising a first switch (142) disposed on the housing and movable between at least a first and a second position, wherein the first light source illuminates in the first position and the second light source illuminates in the second position.

7. The power hand tool of any preceding claim, wherein the housing defines a passage (150), wherein a cutting member (152) is disposed on the housing and extends generally in the passage, the cutting member adapted to cut insulating material around a wire upon advancement of the wire through the passage.

8. The power hand tool of any preceding claim, further comprising a second switch (92) disposed on the housing and movable between at least a first and a second position, wherein the output member rotates in a first direction in the first position and rotates in an opposite second direction in the second position.

9. The power hand tool of any preceding claim, further comprising a locking member (66) disposed on the housing and movable between a first and a second position, wherein the first and second jaw members are precluded from rotating in the first position.

10. The power hand tool of any preceding claim, wherein the bit holder defines a hex bit holder.

11. The power hand tool of any preceding claim, wherein the first and second jaw members define complementary cutting portions (60, 62).

12. The power hand tool of any preceding claim, wherein the housing (312) and a handle (350) of one of the jaw members define complementary cutting portions (361, 363).

13. A power hand tool (10, 210, 310) comprising:
a generally longitudinal housing (12);
an indicator (122, 126) disposed on the housing;
a motor assembly (82) in the housing, the motor assembly including an output member (80) arranged at an end (26) of the housing;
a sensor (102) arranged at the end and configured to sense an electrical field in proximity thereof and generate a signal in response thereto; and
a controller (106) that receives the sensor signal from the sensor and that controls operation of the indicator in response thereto.

14. The power hand tool of claim 13 wherein the indicator includes at least one light source (112, 114, 116, 118).

15. The power hand tool of claim 14 wherein the indicator includes a series of light sources (112, 114, 116, 118), wherein the controller illuminates the series of light sources in a flashing sequence corresponding to a magnitude of the electrical field sensed by the sensor.

16. The power hand tool of any one of claims 13 to 15, wherein the indicator further includes an audible output device (126) that emits an audible output signal and wherein the controller activates the audible output device based on the sensed electrical field.

17. The power hand tool of any one of claims 13 to 16, further comprising a first light source (130) disposed at the end and a second light source (132) disposed at an opposite end (24) of the housing.

18. The power hand tool of the claim 17, further comprising a first switch (142) disposed on the housing and movable between at least a first and a second position, wherein the first light source illuminates in the first position and the second light source illuminates in the second position.

19. The power hand tool of anyone of claims 13 to 18, wherein the sensor includes a generally cylindrical antenna (102) disposed at least partially around the output member.

20. The power hand tool of claim 19 wherein the antenna is capacitively coupled to the output member.

21. The power hand tool of claim 20, further comprising a bit (146) releasably coupled to the output member, wherein the bit and output member collectively shape an electric field and wherein the antenna senses the electric field.

22. The power hand tool any one of claims 13 to 21, further comprising a first and second jaw member (32, 34) arranged at the end of the housing wherein one of the first and second jaw members (32) rotates relative to the other jaw member (34).
